## Europäisches Patentamt

## European Patent Office

## Office européen des brevets

(19)

(11) Veröffentlichungsnummer: **0 176 906**
**A2**

(12) # EUROPÄISCHE PATENTANMELDUNG

(21) Anmeldenummer: 85112012.1

(22) Anmeldetag: 23.09.85

(51) Int. Cl.⁴: **F16L 41/08** , G01F 15/18 , G01L 19/00

(30) Priorität: 27.09.84 CH 4627/84

(43) Veröffentlichungstag der Anmeldung:
09.04.86 Patentblatt 86/15

(84) Benannte Vertragsstaaten:
AT BE DE FR GB IT LU NL SE

(71) Anmelder: GWF Gas- & Wassermesserfabrik AG
Obergrundstrasse 119
CH-6002 Luzern(CH)

(72) Erfinder: Haas, Alfred
Untere Burghalden 33
CH-4410 Liestal(CH)
Erfinder: Graf, Stephan
Obere Rebgasse 69
CH-4314 Zeiningen(CH)

(74) Vertreter: Eder, Carl E. et al
Patentanwaltsbüro EDER AG
Münchensteinerstrasse 2
CH-4052 Basel(CH)

(54) Zur Durchführung von Messungen in einer Rohrleitung dienende Vorrichtung.

(57) Die Vorrichtung besteht aus einem T-förmigen Rohrstück (1) auf welches ein Aufsatz aufsetzbar ist, der eine Grundplatte (2) und ein relativ zu dieser verschwenkbares Gehäuse (7) aufweist. Dieses Gehäuse (7) enthält zwei Kammern (8, 9), die eine zur Aufnahme des den Abzweigstutzen (1b) des T-Stückes abschliessenden Zapfens (1d) und die andere, in welcher ein das Messorgan tragender Träger (16) parallel zur Achse (33) des Abzweigstutzens (1b) verschiebbar ist. Ein erstes Sicherungsorgan (28, 29, 30) gewährleistet, dass die Kammer (8), die zur Aufname des Zapfens (1d) dient, nicht geöffnet werden kann, solange sie sich über der Öffnung (2a) der Grundplatte (2) befindet. Eine zweite Sperrvorrichtung verhindert ein nach-unten-Schieben des Trägers (16), solange sich die zweite Kammer (9) nicht über der Öffnung (2a) in der Grundplatte (2) befindet. Die beiden Sicherheitsvorrichtungen verhindern unabhängig voneinander ein Zurückdrehen des Gehäuses in die Ausgangsstellung, solange der Träger (16) und der Abschluss-Schiebar (10) für die Kammer (8) nicht in ihre Ausgangsstellung zurückgebracht worden sind.

FIG. 1

Es sind schon viele Messvorrichtungen bekannt, die sich in Rohrleitungen einbauen lassen, um Messungen in einem strömenden Medium durchzuführen, wie Druckmessungen, Temperaturmessungen, Messungen der Durchflussgeschwindigkeit und der Durchflussmenge u.a.m.. Wenn solche Messungen dauernd oder doch von Zeit zu Zeit durchgeführt werden müssen, kann es vom Aufwand her vernünftig sein, die Messeinrichtung fest mit dem Rohr zu verbinden, d.h. in die Rohrleitung einzubauen. Wenn die Messungen aber nur selten vorgenommen werden müssen, so ist es kostengünstiger, eine abnehmbare Messeinrichtung zu schaffen und Mittel vorzusehen, die ein Öffnen der Rohrleitung zum Einführen der Messvorrichtung auch dann gestatten, wenn die Rohrleitung unter Druck steht. Eine Vorrichtung dieser Art, zur Vornahme von Messungen an im Boden verlegten Wasserleitungen ist aus der Schweizerpatentschrift 629598 bekannt. Die vorliegende Erfindung betrifft nun ebenfalls eine zur Durchführung von Messungen in einer Rohrleitung dienende Vorrichtung, die aus zwei Teilen besteht, nämlich einen in die Rohrleitung einzusetzenden Rohrstück mit einem Abzweig stutzen und einem auf diesen Abzweigstutzen dicht aufsetzbaren, ein Messgerät enthaltenden Aufsatz. Diese neue Vorrichtung ist speziell für Messungen an frei zugänglichen Leitungen ausgestaltet und ist dadurch gekennzeichnet, dass der Abzweigstutzen durch einen auschraubbaren Zapfen verschlossenen ist und dass der Aufsatz zwei um eine zur Achse des Abzweigstutzens parallele Achse gegeneinander von einer ersten Endstellung in eine zweite Endstellung verschwenkbare, mit Dichtungsmitteln versehene Teile aufweist, nämlich

a) eine mit einer Öffnung zum Aufsetzen in nur einer einzigen Stellung auf den Abzweigstutzen ausgebildete Grundplatte, die mit einem zur lösbaren Befestigung am Abzweigstutzen dienenden Festhalter versehen ist, und

b) ein Gehäuse mit zwei Kammern, von denen sich in der ersten Endstellung die eine und in der zweiten Endstellung die andere Kammer über der Öffnung der Grundplatte befindet, wobei die eine Kammer zur Aufnahme des aus dem Abzweigstutzen herauszuschraubenden Zapfens ausgebildet ist, während in der anderen Kammer das Messgerät in einem Halter gelagert ist, der sich in der zur Achse des Abzweigstutzens parallelen Richtung verschieben lässt, um das Messgerät in den Abzweigstutzen einzuführen, wenn sich diese andere Kammer über der Öffnung der Grundplatte befindet.

Nachfolgend wird anhand der beiliegenden Zeichnung ein Ausführungsbeispiel der Erfindung beschrieben. In der Zeichnung zeigt:

die Figur 1 einen Schnitt durch den auf den Abzweig stutzen aufgesetzten Aufsatz nach der Linie I-I

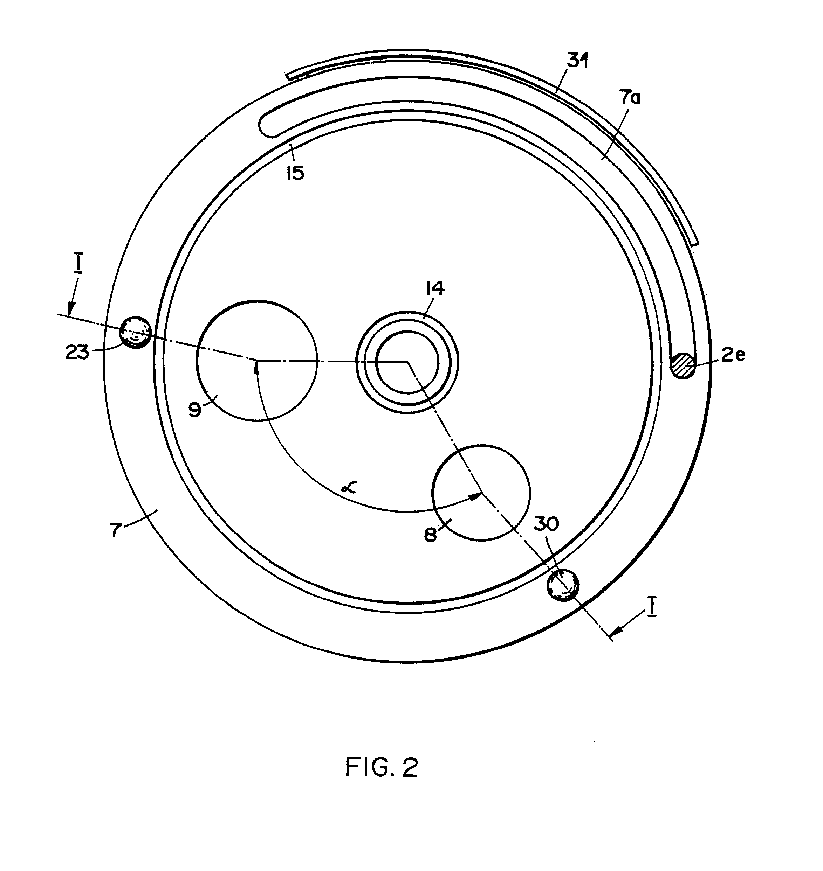

der Figur 2, die ihrerseits einen Schnitt nach der Linie II-II der Figur 1 darstellt;

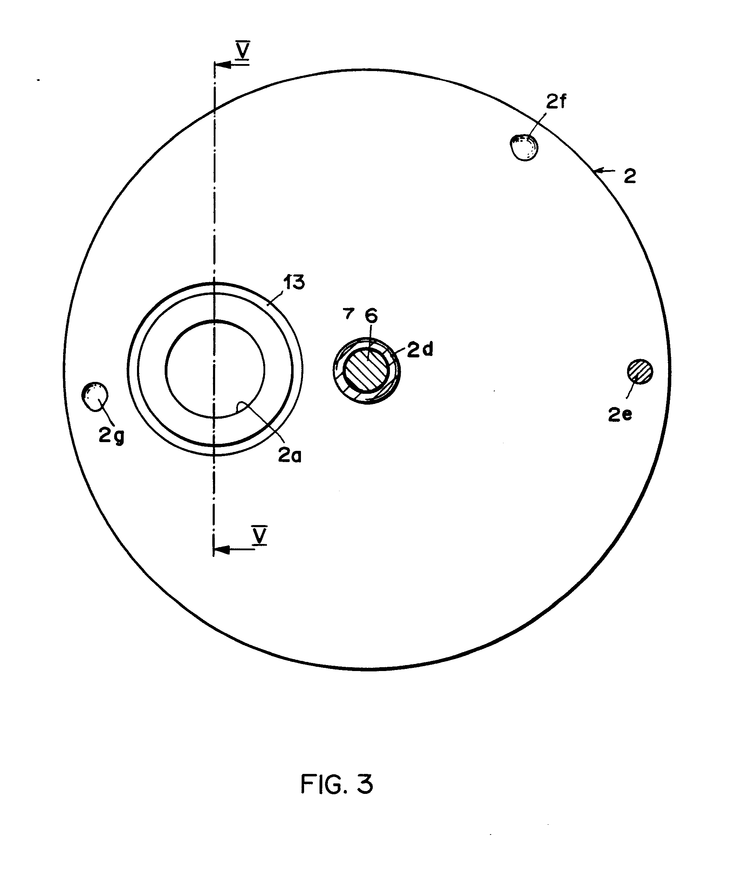

die Figur 3 zeigt einen Schnitt nach der Linie III-III der Figur 1,

die Figur 4 eine Untenansicht des nicht auf dem Abzweigstutzen befestigten Aufsatzes und

die Figur 5 einen axialen Schnitt durch einen Teil des auf dem Abzweigstutzen befestigten Aufsatzes, wenn sich die Kammer 9 ungefähr nach der Linie V-V der Figur 3 über der Öffnung der Grundplatte befindet und die Mess-Sonde in den Abzweigstutzen eingefahren ist.

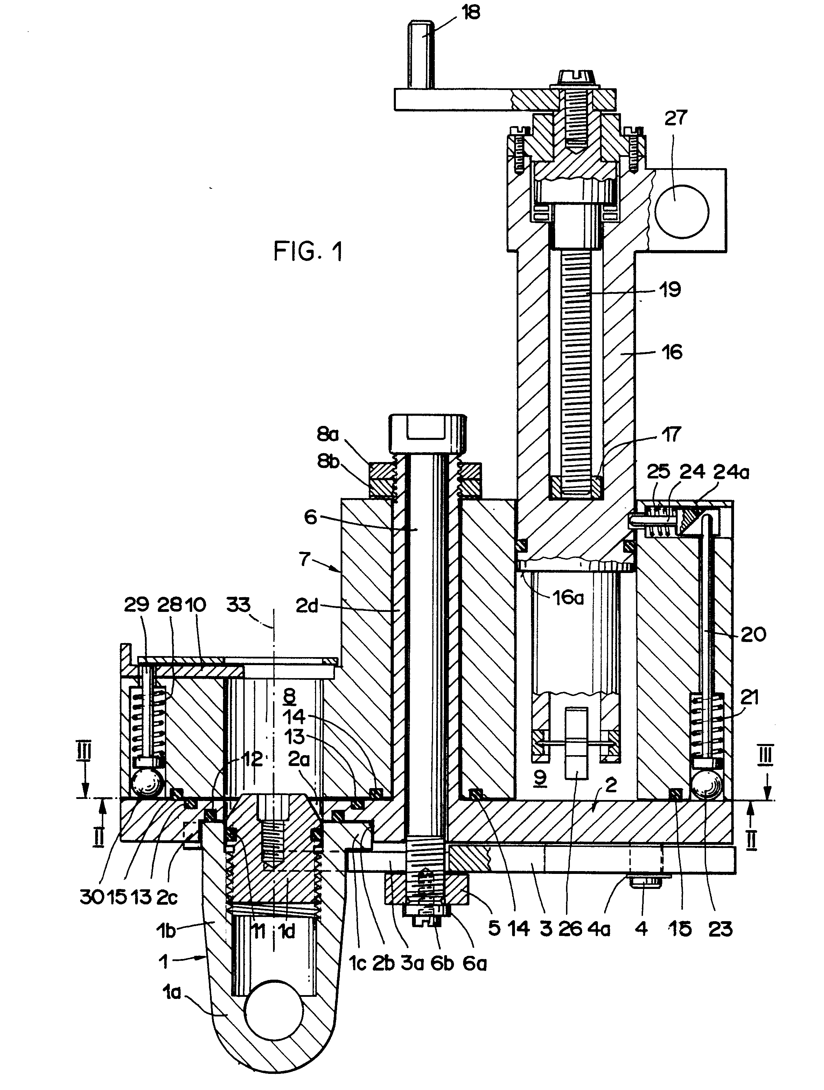

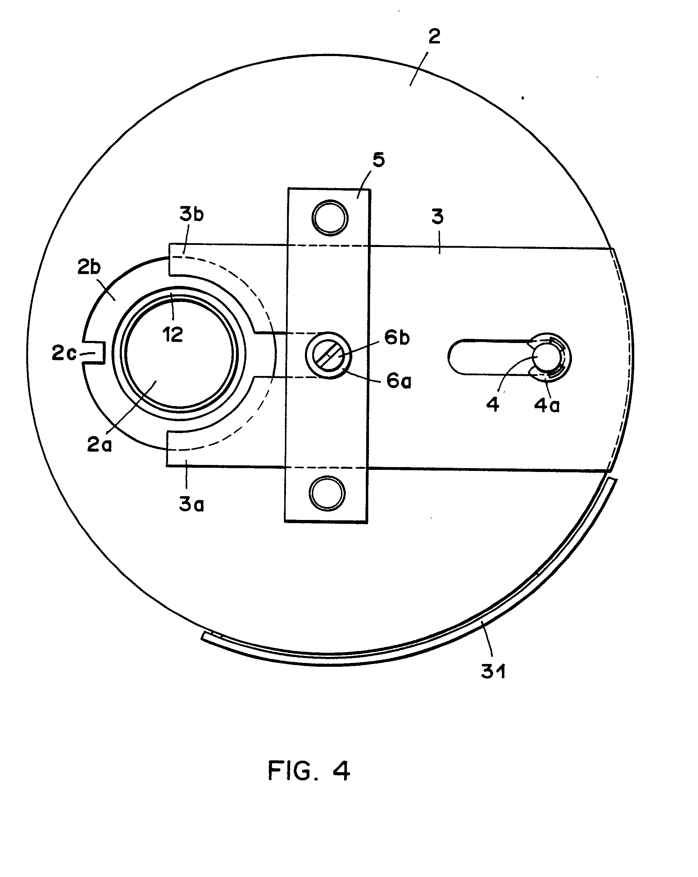

Die Messvorrichtung besteht also im wesentlichen aus zwei Einzelteilen: einem in eine Rohrleitung einzusetzenden T-Stück 1, also einem Rohrstück 1a und einem durch einen eingeschraubten Zapfen 1d verschlossenen Abzweigstutzen 1b einerseits und einem auf die Mündung des Abzweigstutzens 1b aufsetzbaren Aufsatz andererseits. Dieser Aufsatz hat eine Grundplatte 2 mit einer Bohrung 2a und einer die Bohrung auf der Unterseite umgebende Ausnehmung 2b für den Flansch 1c des Abzweigstutzens 1b. Wie man aus den Figuren 1 und 4 ersehen kann, hat der Flansch 1c eine Aussparung, in die die Nase 2c der Grundplatte 2 hineinpasst, damit nur eine einzige Möglichkeit für das Aufsetzen der Grundplatte 2 auf den Flansch 1c des Abzweigsstutzens, dessen Achse mit 33 bezeichnet ist, besteht. Das Rohrstück 1a kann, wie im gezeichneten Beispiel, an der Stelle des Abzweigstutzens eine zur Erhöhung der Durchflussgeschwindigkeit des durchfliessenden Mediums dienende Verengung aufweisen; das Rohrstück 1a kann jedoch auch anderswei ausgestaltet sein.

Auf der Unterseite der Grundplatte 2 ist ein Schieber 3 angebracht, der durch einen mit einem Segerring 4a versehenen Boltzen 4 und eine Traverse 5 längsverschiebbar gehalten ist, so dass seine beiden Enden 3a und 3b unter den Flansch 1c des Abzweigstutzens 1b geschoben werden können, um die Grundplatte 2 am Abzweigstutzen 1b festzuhalten. In dieser in den Figuren 1, 4 und 5 dargestellten Stellung lässt sich der als Fest-halter dienende Schieber 3 mittels der Schraube 6 dadurch festklemmen, dass durch das Drehen der Schraube 6 die Traverse 5 an den Schieber 3 und dessen freien Enden 3a und 3b infolge dessen von unten an den Flansch 1c gepresst werden.

Damit die Schraube 6 nicht unbeabsichtigt aus der Traverse 5 herausgeschraubt werden kann, wird sie durch einen Ring 6a gesichert, der seinerseits durch eine Schraube 6b festgehalten wird.

Auf der Grundplatte ist ein Gehäuse 7 verschwenkbar befestigt. Als Schwenkachse dient das mit der Grundplatte 2 fest verbundene, zur Achse 33 parallele Rohr 2d, durch welches hindurch die Schraube 6 geführt ist. Eine axiale Verschiebung wird durch die beiden Muttern 8a und 8b verhindert, die Begrenzung des Verschiebewegs erfolgt durch einen mit der Grundplatte fest verbundenen Zapfen 2e, der in eine entsprechende Rille 7a in der der Grundplatte 2 zugewandten Fläche des Gehäuses 7 hineinragt.

Das Gehäuse 7 weist zwei Kammern auf, von denen die eine mit 8 und die andere mit 9 bezeichnet ist. Die Kammer 8 wird durch eine- oben durch einen Schieber 10 teilweise überdeckte Bohrung gebildet, deren Durchmesser mit dem Durchmesser der Bohrung 2a in der Grundplatte und dem Durchmesser des obern Teils des im Abzweigstutzen 1b eingeschraubten Zapfens 1d übereinstimmt. Der Schieber 10 wird durch eine Sperrvorrichtung in der Schliessstellung festgehalten, wobei die Sperrvorrichtung einen durch die Feder 28 belasteten, zum Festhalten des Schiebers dienenden Stift 29 aufweist, dessen eines Ende in der in der Zeichnung dargestellten Lage den Schieber 10 festhält, während das andere Ende eine Kugel 30 auf die Grundplatte 2 drückt. Wenn sich nun die Einzelteile in der in der Figur 1 dargestellten Lage befinden, ist es möglich, mittels eines Mehrkantschlüssels den Zapfen 1d aus dem Abzweigstutzen 1b herauszuschrauben. Dann wird er infolge des im Rohrstück 1a vorhandenen Druckes bis zum Schieber 10 gedrückt, kann aber wegen dieses Schiebers 10 die Kammer 8 nicht verlassen. Die Dichtungsringe 11, 12, 13, 14 und 15 bewirken, dass aus der Rohrleitung keine Flüssigkeit austreten kann.

In der andern Kammer 9 ist ein vertikal, d.h. parallel zur Achse 33 des Abzweigstutzens 1b verschiebbarer Halter 16 angeordnet, der durch eine mit einem Innengewinde versehene Traverse 17 gegen Drehung relativ zum Gehäuse gesichert ist. Frei drehbar mit dem Halter ist die mit einer Kurbel 18 versehene Schraube 19 verbunden, durch deren Drehung such der Halter 16 relativ zur Traverse 17 auf- und abwärts bewegen lässt, solange er nicht durch die ihm zugeordnete Sperrvorrichtung festgehalten wird. Diese Sperrvorrichtung weist einen Stift 20 auf, der durch eine Feder 21 gegen die auf der Grundplatte 2 aufliegende Kugel 23 gedrückt wird, während auf das von der Grundplatte 2 abgewandte Ende des Stiftes 20 an der Schrägfläche 24a eines zweiten Stiftes 24 ansteht, der durch die Feder 25 an das Ende des Stiftes 20 angedrückt wird. Am andern Ende des Halters 16 befindet sich ein Messorgan, das hier als Flügel- oder Zahnrad 26 ausgebildet ist, bei dem es sich jedoch auch um einen Temperaturfühler oder ein anderes Messorgan handeln könne und von welchem nicht dargestellte elektrische Leitungen zum Stecker 27 führen.

Wenn nun, wie vorstehend beschrieben, der Zapfen 1d ausgeschraubt ist und sich in der Kammer 8 befindet, kann man das Gehäuse 7 relativ zur Grundplatte 2 um den Winkel α aus dieser ersten Endstellung in eine zweite Endstellung verschwenken, in welcher der Zapfen 2e am andern Ende der Rille 7a ansteht. In dieser andern Endstellung, in welcher sich die Kammer 8 über der Öffnung 2a der Grundplatte 2 befindet, steht das mit dem Gehäuse 7 fest verbundene Schnutzschild 31 im Verschiebeweg des Schiebers 3, so dass dieser nicht verschoben und der Aufsatz infolge dessen nicht vom Abzweigstutzen 1b entfernt werden kann. Durch das gegenseitige Verdrehen der beiden Teile gelangt die Kugel 30 in den Bereich der Vertiefung 2f der Grundplatte 2, so dass der Stift 29 durch die Feder 28 nach unten gestossen wird, wodurch der Schieber 10 freigegeben wird und der Zapfen 1d aus der Kammer 8 herausgenommen, überprüft und gereinigt werden kann. In dieser andern Endstellung befindet sich die Kugel 23 über der Vertiefung 2g der Grundplatte 2, so dass der Stift 20 durch die Feder 21 nach unten geschoben wird und die Feder 25 den Stift 24 aus der gezeichneten Sperrstellung in Freigabestellung verschiebt, worauf man durch drehen der Kurbel 18 den Halter 16 so weit nach unten verschieben kann, bis sein Bund 16a auf der Grundplatte 2 aufsteht.

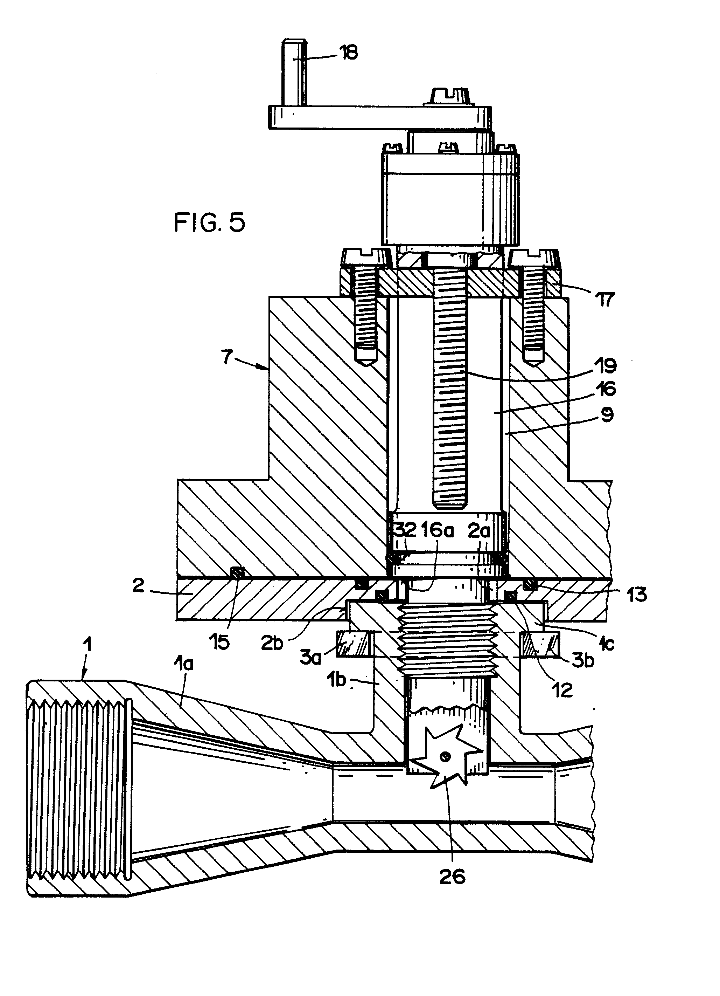

In dieser in der Figur 5 darbestellten Lage, in welcher sich das Messorgan 26 an einer reproduzierbaren Stelle im Rohrstück 1 befindet, kann die Messung mittels des Messorgans 26 durchgeführt werden. In dieser Lage verhindern die Dichtungen 12, 13 und 32 das Austreten des zu messenden Mediums. Solange weder der Schieber 10 vollständig geschlossen noch der Träger 16 ganz in seine Ausgangsstellung zurückgebracht worden ist, verhindern die Kugeln 30 bzw. 23, die Bestandteile der entsprechenden Sperrvorrichtung sind, ein Verschwenken des Gehäuses 7 relativ zur Grundplatte 2.

Man wird nach Beendigung der Messung den Schieber 10 schliessen und den Träger 16 in die in der Figur 1 dargestellten Lage zurückbringen und kann erst dann die beiden gegeneinander verschwenkbaren Teile gegeneinander Verdrehen. Nachher wird man den Zapfen 1d einschrauben, die Schraube 6 lösen und die Schieber 3 zurückziehen, um den ganzen Aufsatz vom Abzweigstutzen 1b zu trennen.

**Ansprüche**

1. Zur Durchführung von Messungen in einer Rohrleitung dienende Vorrichtung, die aus zwei Teilen besteht, nämlich einem in die Rohrleitung einzusetzenden Rohrstück (1) mit einem Abzweigstutzen (1b) und einem auf diesen Abzweigstutzen dicht aufsetzbaren, ein Messgerät enthaltenden Aufsatz, dadurch gekennzeichnet, dass der Abzweigstutzen (1b) durch einen auschraubbaren Zapfen (1d) verschlossen ist und dass der Aufsatz zwei um eine zur Achse (33) des Abzweigstutzens (1b) parallele Achse gegeneinander von einer ersten Endstellung in eine zweite Endstellung verschwenkbare, mit Dichtungsmitteln (11, 12, 13, 14, 15, 32) versehene Teile aufweist, nämlich.

a) eine mit einer Öffnung (2a) zum Aufsetzen in nur einer einzigen Stellung auf den Abzweigstutzen (1b) ausgebildete Grundplatte (2), die mit einem zur lösbaren Befestigung am Abzweigstutzen dienenden Festhalter (3) versehen ist, und

b) ein Gehäuse (7) mit zwei Kammern (8, 9), von denen sich in der ersten Endstellung die eine (8) und in der zweiten Endstellung die andere Kammer (9) über der Öffnung (2a) der Grundplatte (2) befindet, wobei die eine Kammer (8) zur Aufnahme des aus dem Abzweigstutzen (1b) herauszuschraubenden Zapfens (1d) ausgebildet ist, während in der anderen Kammer das Messgerät (26) in einem Halter (16) gelagert ist, der sich in der zur Achse (33) des Abzweigstutzens parallelen Richtung verschieben lässt, um das Messgerät (26) in den Abzweigstutsen (1b) einzuführen, wenn sich diese andere Kammer (9) über der Öffnung (2a) der Grundplatte (2) befindet.

2. Vorrichtung nach Anspruch 1, dadurch gekennzeichnet, dass die zur Aufnahme des Zapfens (1d) ausgebildete erste Kammer (8) an ihrem der Grundplatte (2) abgewandten Ende einen zum teilweisen Verschliessen dienenden Schiebedeckel (10) aufweist und dass eine erste Sperrvorrichtung (28, 29, 30) vorhanden ist, die einerseits das Öffnen des Schiebedeckel (10) nur ermöglicht, wenn sich die andere Kammer (9) über der Öffnung (2a) der Grundplatte (2) befindet, und die andererseits das Verschwenken des Gehäuses (7) relativ zur Grundplatte (2) nur dann ermöglicht, wenn sich der Schiebedeckel (10) in der Schliessstellung befindet.

3. Vorrichtung nach Anspruch 2, dadurch gekennzeichnet, dass die erste Sperrvorrichtung (28, 29, 30) mindestens einen federbelasteten (28) Stift (29) aufweist, der durch die Feder gegen die mit einer die Steuerung des Stiftes bewirkenden Vertiefung (2f) versehene Grundplatte (2) gedrückt wird und mit seinem der Grundplatte abgewandten Ende je nach seiner Stellung das Verschieben des Schiebedeckels (10) ermöglicht oder verhindert und je nach der Stellung des Schiebedeckels das gegenseitige Verschwenken zwischen Grundplatte (2) und Gehäuse (7) ermöglicht oder verhindert.

4. Vorrichtung nach Anspruch 1, gekennzeichnet durch eine zweite Sperrvorrichtung (20, 21, 23, 24, 25), die einerseits das Verschieben des Halters (16) in Richtung gegen die Grundplatte (2) nur dann ermöglicht wenn sich die andere Kammer (9) über der Öffnung (2a) der Grundplatte (2) befindet, und die andererseits das Verschwenken des Gehäuses (7) relativ zur Grundplatte nur dann ermöglicht, wenn sich der Halter, (16) in der von der Grundplatte (2) abgewandten Endstellung befindet.

5. Vorrichtung nach Anspruch 4, dadurch gekennzeichnet, dass die Sperrvorrichtung mindestens einen federbelasteten (21) Stift (20) aufweist, der durch die Feder (21) gegen die mit einer zur Steuerung des Stiftes bewirkenden Vertiefung (2g) versehene Grundplatte (2) gedrückt wird und mit seinem der Grundplatte abgewandten Ende je nach seiner Stellung das Verschieben des Halters ermöglicht oder verhindert und je nach der Stellung des Halters das gegenseitige Verschwenken zwischen Grundplatte (2) und Gehäuse (7) ermöglicht oder verhindert.

6. Vorrichtung nach Anspruch 1, gekennzeichnet durch eine dritte Sperrvorrichtung (31), die einerseits das Verschieben des Festhalters (3) aus seiner Festhaltestellung so lange verhindert, als sich die erste Kammer (8) nicht über der Öffnung (2a) der Grundplatte (2) befindet, und die andererseits das Verschwenken des Gehäuses (7) relativ zur Grundplatte (2) nur dann ermöglicht, wenn sich der Festhalter (3) in der Festhaltestellung befindet.

0 176 906

FIG. 1

FIG. 2

FIG. 3

FIG. 4

FIG. 5